# EUROPÄISCHE PATENTSCHRIFT

(11) **EP 0 962 243 B1**
(45) Veröffentlichungstag und Bekanntmachung des Hinweises auf die Patenterteilung: **06.10.2004**
(21) Anmeldenummer: 99108022.7
(22) Anmeldetag: 23.04.1999
(51) Int. Cl.: B01D 39/08, B01D 39/14, B01D 39/20

(54) **Filtermedium**
Filter medium
Milieu filtrant

(30) Priorität: 08.05.1998 DE 19820560
(43) Veröffentlichungstag der Anmeldung: 08.12.1999
(73) Patentinhaber: MGF GUTSCHE & CO. GMBH-BETRIEBS-KG, 36039 Fulda (DE)
(72) Erfinder: Gutsche, Eugen, 36041 Fulda (DE); Gutsche, Michael, 36039 Fulda (DE)
(74) Vertreter: Hebing, Norbert

(56) Entgegenhaltungen:
- EP-A- 0 358 222
- EP-A- 0 801 969
- DE-A- 3 029 752
- FR-A- 2 584 942
- US-A- 3 937 860
- US-A- 4 270 933

## Beschreibung

Die Erfindung betrifft ein Filtermedium, welches ein Filtergewebe aus Glasfasern hat, das durch Vernadeln mit temperaturfesten, polymeren Stapelfasern belegt ist, wobei der Gewichtsanteil der Stapelfasern am Gesamtgewicht des Filtermediums unter 40% liegt.

Ein Filtermedium der vorstehenden Art ist Gegenstand der DE 196 15 022. Das Filtermedium gemäß dieser Schrift unterscheidet sich von zuvor bekannten Filtermedien in erster Linie dadurch, dass die Glasfasern nicht nur die Funktion eines Stützgewebes aufweisen, sondern aufgrund der Dichte des durch sie gebildeten Gewebes eine Filterfunktion ausüben. Weiterhin dienen die Stapelfasern dazu, Querbrüche des Filtermediums zu verhindern, indem durch die Stapelfasern ein Knicken mit für die Glasfasern zu engen Krümmungsradien ausgeschlossen wird.

Ein Filtermedium mit einem Stützgewebe aus Glasfasern, welches mit etwa 40 Gew.-% Stapelfasern aus PTFE belegt ist, wird beispielsweise in der FR 2 584 942 beschrieben. Das Glasfasergewebe gemäß dieser Schrift hat ein Flächengewicht bis zu 350 g/m² und vermag aufgrund seiner Maschenweite keine wesentliche Filterfunktion auszuüben.

Filtermedien werden oftmals mechanisch stark beansprucht. Das ist beispielsweise bei Schlauchfiltern der Fall, wenn die Abreinigung der Filterschläuche durch Druckluftstöße erfolgt. Es hat sich gezeigt, dass es bei dem bekannten Filtermedium unter ungünstigen Bedingungen durch die Druckluftimpulse in einzelnen Bereichen zu einem Entnadeln kommt, wodurch der Schutz vor Querbrüchen verloren geht. Diese Gefahr ist wegen des geringen Anteils der Stapelfasern besonders groß, weil die Stapelfasern dadurch nur einen verhältnismäßig geringen gegenseitigen Verbund erhalten und aufgrund ihrer glatten Oberfläche schlecht im Glasfasergewebe verankert sind.

Der Erfindung liegt das Problem zugrunde, ein Filtermedium der eingangs genannten Art so weiterzuentwickeln, dass auch bei hohen mechanischen Beanspruchungen die Gefahr eines Entnadelns möglichst gering ist.

Dieses Problem wird erfindungsgemäß dadurch gelöst, dass das Filtergewebe ein Flächengewicht von über 350 g/m² und eine Dicke von mindestens 0,5 mm hat, dass die Stapelfasern einen Titer von 0,80 dtex bis 8 dtex und eine Schnittlänge von mindestens 20 mm haben und dass die Stapelfasern eine im Vergleich zu PTFE-Fasern rauere Oberfläche aufweisen.

Bei einem solchen Filtermedium ist die Gefahr eines Entnadelns infolge hoher mechanischer Beanspruchung durch mehrere, sich gegenseitig ergänzende Merkmale zuverlässig ausgeschlossen. Weil die Stapelfasern einen sehr geringen Durchmesser und eine Länge von mindestens 20 mm aufweisen, sind die einzelnen Stapelfasern beim Vernadeln in der Lage, trotz der geringen Maschenweite des Filtergewebes mehrfach durch das Filtergewebe aus Glasfasern hindurchzuführen, wodurch sie dort gut verankert werden. Die raue Oberfläche der Stapelfasern erhöht zusätzlich den Halt der Stapelfasern im Glasfasergewebe, indem sie für eine gute Verankerung der Stapelfasern sorgt.

Trotz der geringen Belegung mit Stapelfasern sind bei dem erfindungsgemäßen Filtergewebe Querbrüche zuverlässig ausgeschlossen, weil es zu keiner Entnadelung kommen kann und deshalb das zur Verhinderung von Querbrüchen unerlässliche Minimum an querstehenden Stapelfasern nicht unterschritten wird.

Das erfindungsgemäße Filtermedium kann in Schlauchfilteranlagen eingesetzt werden, welche nach dem Druckluft-Impuls-Verfahren abgereinigt werden, ohne dass die Drahtabstände der Stützkörbe, auf welche die Filterschläuche aufgezogen sind, so verringert werden müssen wie bei reinen Glasgeweben. Es müssen auch nicht so viele Längsdrähte in die Stützkörbe integriert werden, so dass durch die Verwendung des erfindungsgemäßen Filtermediums für Filteranlagen, welche durch Druckluftimpulse abgereinigt werden, Kosten bei den Stützkörben eingespart werden können.

Da Glasfasern sehr viel feiner als jedes herkömmliche synthetische Polymer sind (im Durchschnitt zwischen 0,1 - 0,3 µm) und das Glasfasergewebe bereits ein hohes Flächengewicht hat, ergibt sich in Kombination mit dem Polymer ein Filtermaterial mit hoher Abscheideleistung und gleichzeitig eine Erhöhung der bekannten, schlechten Querbruchfestigkeit von reinen Glasmaterialien.

Als Stapelfasern können auch Polymere verwendet werden, welche von Hause aus eine sehr glatte Oberfläche aufweisen, wenn gemäß einer Weiterbildung der Erfindung die raue Oberfläche der Stapelfasern durch einen nach dem Vernadeln aufgebrachten, polymeren Überzug erzeugt ist.

Besonders sicher sind die Stapelfasern mit dem Filtergewebe verbunden, wenn gemäß einer anderen Weiterbildung der Erfindung die Stapelfasern eine nach dem Vernadeln durch eine Wärmebehandlung mit Temperaturen über 150°C erzeugte Schrumpfung aufweisen. Durch diesen Schrumpfvorgang umschlingen sich die Stapelfasern besonders fest mit dem Filtergewebe und zugleich miteinander.

Der Überzug ist besonders kostengünstig zu erzeugen, wenn er aus einem anorganische Füllstoffe aufweisenden PTFE besteht. Als Füllstoffe kommen insbesondere solche Pulver in Frage, die eine große Oberfläche aufweisen.

Als besonders wirksam hat sich als anorganischer Füllstoff synthetische Kieselsäure gezeigt.

Das Filtermedium widersteht hohen Temperaturen und verstärktem, chemischem Angriff besonders gut, wenn gemäß einer Weiterbildung der Erfindung die Stapelfasern aus PTFE bestehen und einen Titer von höchstens 3,5 dtex haben.

Die Filtrationseigenschaften des Filtermediums und sein Kosten-/Nutzenverhältnis können weiter verbessert werden, wenn gemäß einer anderen Weiterbildung der Erfindung die aufgenadelten, temperaturfesten, polymeren Stapelfasern aus Polyimid, Polyacrylnitril, Polyphylensulfid oder Aramid bestehen.

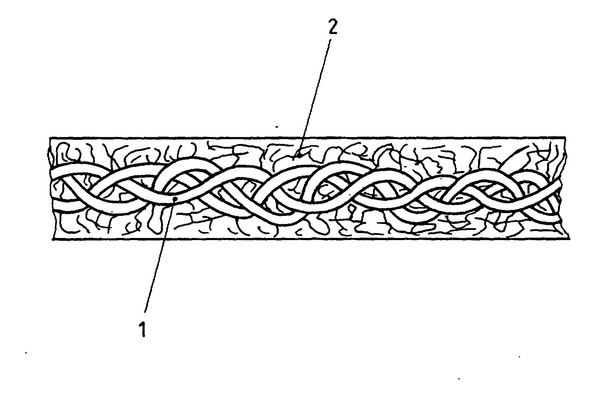

Zur weiteren Verdeutlichung der Erfindung wird nachfolgend auf die Zeichnung Bezug genommen. Diese zeigt einen schematischen Querschnitt durch ein Filtermedium nach der Erfindung.

Das dargestellte Filtermedium hat ein Filtergewebe 1, welches aus miteinander verwebten Glasfasern besteht, einen Gewichtsanteil von 70 - 85% am Gesamtgewicht des Filtermediums und ist beispielsweise 0,9 mm hoch. Das Filtergewebe 1 ist schon für sich allein in der Lage, eine Filterfunktion auszuüben, denn es hat aufgrund seiner Dicke genügend Längsfestigkeit, so dass ein herkömmliches Stützgewebe unnötig wird. Das Filtergewebe 1 ist mit einem geringen Anteil Stapelfasern 2 belegt, wodurch das Filtermedium beispielsweise eine Dicke von 1,4 mm erhält. Will man das Filtermedium knicken, dann verhindern diese eingenadelten, polymeren Stapelfasern 2 enge Krümmungsradien bei den das Filtergewebe bildenden Glasfasern und vermeiden so Querbrüche.

Das Filtergewebe 1 ist so engmaschig gewebt, dass es ein Flächengewicht von über 350 g/m² und eine Dicke von mindestens 0,5 mm hat. Die Glasfasern haben einen Titer von höchstens 0,80 dtex bis 8 dtex und eine Schnittlänge von mindestens 20 mm. Nach dem Vernadeln wird das Filtermedium einer Wärmebehandlung über 150°C unterzogen, damit die Stapelfasern 2 schrumpfen können und sich dadurch gegenseitig und in dem Filtergewebe 1 verankern. Zusätzlich wird das Filtermedium nach dem Vernadeln mit PTFE-Stapelfasern vorzugsweise in einem Bad mit einem Überzug versehen, der den PTFE-Stapelfasern eine raue Oberfläche verleiht.

## Patentansprüche

1. Filtermedium, welches ein Filtergewebe (1) aus Glasfasern hat, das durch Vernadeln mit temperaturfesten, polymeren Stapelfasern belegt ist, wobei der Gewichtsanteil der Stapelfasern am Gesamtgewicht des Filtermediums unter 40% liegt, **dadurch gekennzeichnet, dass** das Filtergewebe (1) ein Flächengewicht von über 350 g/m² und eine Dicke von mindestens 0,5 mm hat, dass die Stapelfasern (2) einen Titer von 0,80 dtex bis 8 dtex und eine Schnittlänge von mindestens 20 mm haben und dass die Stapelfasern (2) im Vergleich zu PTFE eine rauere Oberfläche aufweisen.

2. Filtermedium nach Anspruch 1, **dadurch gekennzeichnet, dass** die raue Oberfläche der Stapelfasern (2) durch einen nach dem Vernadeln aufgebrachten, polymeren Überzug erzeugt ist.

3. Filtermedium nach Anspruch 1, **dadurch gekennzeichnet, dass** die Stapelfasern (2) eine nach dem Vernadeln durch eine Wärmebehandlung mit Temperaturen über 150°C erzeugte Schrumpfung aufweisen.

4. Filtermedium nach Anspruch 2, **dadurch gekennzeichnet, dass** der Überzug aus einem anorganische Füllstoffe aufweisenden PTFE besteht.

5. Filtermedium nach Anspruch 4, **dadurch gekennzeichnet, dass** als anorganischer Füllstoff synthetische Kieselsäure vorgesehen ist.

6. Filtermedium nach Anspruch 1, **dadurch gekennzeichnet, dass** die Stapelfasern (2) aus PTFE bestehen und einen Titer von höchstens 3,5 dtex haben.

7. Filtermedium nach den Ansprüchen 1 oder 2, **dadurch gekennzeichnet, dass** die Stapelfasern (2) aus Polyimid, Polyphylensulfid, Polyacrylnitril oder Aramid bestehen.

## Claims

1. Filter medium which has a filter fabric (1) of glass fibres covered by needling with thermally stable polymer staple fibres, wherein the proportion by weight of the staple fibres to the whole filter medium is below 40%, **characterized in that** the filter fabric (1) has a weight per unit area of over 350 g/m² and a thickness of at least 0.5 mm, **in that** the staple fibres (2) have a linear density of 0.80 dtex to 8 dtex and a cut length of at least 20 mm, and **in that** the staple fibres (2) have a rougher surface than PTFE.

2. Filter medium according to Claim 1, **characterized in that** the rough surface of the staple fibres (2) is produced by a polymer coating applied after the needling.

3. Filter medium according to Claim 1, **characterized in that** the staple fibres (2) exhibit shrinkage produced after the needling by heat treatment at temperatures of over 150°C.

4. Filter medium according to Claim 2, **characterized in that** the coating consists of a PTFE which contains inorganic fillers.

5. Filter medium according to Claim 4, **characterized in that** synthetic silicic acid is provided as the inorganic filler.

6. Filter medium according to Claim 1, **characterized in that** the staple fibres (2) consist of PTFE and have a linear density of not more than 3.5 dtex.

7. Filter medium according to Claim 1 or Claim 2, **characterized in that** the staple fibres (2) consist of polyimide, polyphylene sulphide, polyacrylonitrile or aramide.

## Revendications

1. Milieu filtrant qui possède un tissu filtrant (1) fait de fibres de verre, qui est garni par aiguilletage de fibres coupés polymères, résistantes à la température, la proportion du poids des fibres coupées dans le poids total du milieu filtrant étant au-dessous de 40%, **caractérisé en ce que** le tissu filtrant (1) possède un poids par unité de surface de plus de 350 g/m² et une épaisseur d'au moins 0,5 mm, **en ce que** les fibres coupées (2) ont un titre de 0,80 dtex à 8 dtex et une longueur de coupe d'au moins 20 mm et **en ce que** les fibres coupées (2) présentent une surface plus rugueuse, par comparaison avec le PTFE

2. Milieu filtrant selon la revendication 1, **caractérisé en ce que** la surface rugueuse des fibres coupées (2) est produite par un revêtement de polymère déposé après l'aiguilletage.

3. Milieu filtrant selon la revendication 1, **caractérisé en ce que** les fibres coupées présentent un retrait produit après l'aiguilletage par un traitement thermique à des températures de plus de 150 °C.

4. Milieu filtrant selon la revendication 2, **caractérisé en ce que** le revêtement est composé d'un PTFE présentant des charges inorganiques.

5. Milieu filtrant selon la revendication 4, **caractérisé en ce qu'**on prévoit comme charge inorganique de l'acide silicique synthétique.

6. Milieu filtrant selon la revendication 1, **caractérisé en ce que** les fibres coupées (2) sont faites de PTFE et ont un titre de 3,5 dtex au maximum.

7. Milieu filtrant selon les revendications 1 et 2, **caractérisé en ce que** les fibres coupées (2) sont composées de polymide, de polysulfure de phénylène, de polyacrylonitrile ou d'aramide.
